# EUROPÄISCHE PATENTSCHRIFT

(11) **EP 2 058 592 B1**
(45) Veröffentlichungstag und Bekanntmachung des Hinweises auf die Patenterteilung: **23.01.2013**
(21) Anmeldenummer: 08016726.5
(22) Anmeldetag: 23.09.2008
(51) Int. Cl.: F23K 5/08, F23C 99/00, F24H 1/00

(54) **Brennstoffbetriebene Heinzeinrichtung, insbesondere für Campingfahrzeuge**
Fuel-powered heating system, in particular for camping vehicles
Dispositif de chauffage fonctionnant au combustible, en particulier pour véhicules de camping

(30) Priorität: 09.11.2007 DE 102007053487
(43) Veröffentlichungstag der Anmeldung: 13.05.2009
(73) Patentinhaber: J. Eberspächer GmbH & Co. KG, 73730 Esslingen (DE)
(72) Erfinder: Eberspach, Günter, 72649 Wolfschlugen (DE)
(74) Vertreter: Ruttensperger, Bernhard

(56) Entgegenhaltungen:
- EP-A1- 1 524 240
- EP-A2- 1 553 653
- EP-A2- 1 795 499
- US-A1- 2004 009 104
- US-A1- 2005 019 623

## Beschreibung

Die vorliegende Erfindung betrifft eine brennstoffbetriebene Heizeinrichtung, wie sie vorzugsweise bei Campingfahrzeugen zum Einsatz gelangen kann. In diesem Einsatzbereich besteht ein grundsätzliches Problem darin, dass durch die bei der Verbrennung von flüssigem Kohlenwasserstoff, wie z. B. Diesel, mit Luft entstehenden Verbrennungsprodukte eine Geruchsbelästigung entsteht, insbesondere dann, wenn ein derartiges Campingfahrzeug auf einem Campingplatz steht. Diese Geruchsbelästigung basiert primär auf der Emission von Ruß und Kohlenwasserstoff, wie sie bei der Verbrennung eines derartigen Kohlenwasserstoff basierenden Kraftstoffs in einer offenen Flamme entstehen.

Die EP 1 524 240 A1 offenbart eine in Verbindung mit einem Reformer und einer Brennstoffzelle einzusetzende Verdampferanordnung zur Erzeugung eines zu einem Reformat umsetzbaren Kohlenwasserstoff/Wasserdampf-Gemisches. Dieses durch Verdampfen von flüssigem Kohlenwasserstoff und Zusammenführen des Kohlenwasserstoffdampfes mit Wasserdampf in einer Mischkammer generierte Gemisch wird einem Reformer zugeleitet. Dieser setzt das Gemisch in katalytischer Reaktion in ein Reformat um, welches der Brennstoffzelle zur Erzeugung elektrischer Energie zugeführt wird. Die die Brennstoffzelle verlassenden Abgase werden in einem Brenner verbrannt.

Die US 2005/0019623 A1 offenbart ein Brennstoffzellensystem, bei welchem in einem Vormischer und einem durch poröses Medium davon getrennten Mischer ein Kohlenwasserstoff/Luft-Gemisch erzeugt und einem Reformer zugeführt wird. Der Kohlenwasserstoff und die Luft werden in dem Vormischer gemischt und über das poröse Medium dem Mischer zugeführt. In diesem Gemisch ggf. noch enthaltene Flüssigkeitspartikel werden in dem porösen Verdampfermedium bzw. bei Austritt aus diesem in den Mischer verdampft. Sowohl dem Vormischer, als auch dem Mischer ist jeweils ein Zündorgan zum Zünden und Verbrennen des darin jeweils enthaltenen Gemisches zugeordnet. In dem auf den Mischer folgenden Reformer wird das Kohlenwasserstoff/Luft-Gemisch zu einem Reformat umgesetzt, welches einer Brennstoffzelle zugeführt wird und darin zusammen mit der ebenfalls zugeführten Luft zur Erzeugung elektrischer Energie umgesetzt wird. Die die Brennstoffzelle verlassenden Abgasströme werden einem Brenner zur weitergehenden Verbrennung zugeführt.

Die EP 1 795 499 A2 offenbart ein Brennstoffzellensystem mit einer vorgeschalteten Reformeranordnung. In einer Gemischbildungszone wird aus Kohlenwasserstoffdampf und Luft ein Gemisch generiert, welches in einem Katalysator des Reformers zu Reformat umgesetzt wird. Das Reformat wird als Anodengas einer Brennstoffzelle zugeführt, welche erwärmte Luft als Kathodengas zur Umsetzung mit dem Anodengas bei der Erzeugung elektrischer Energie empfängt. Die die Brennstoffzelle verlassenden Abgasströme werden einem Restgasbrenner zur weitergehenden Verbrennung zugeführt.

Es ist die Aufgabe der vorliegenden Erfindung, eine brennstoffbetriebene Heizeinrichtung, insbesondere für Campingfahrzeuge, vorzusehen, mit welcher unter Einsatz von Kohlenwasserstoff und Luft als Ausgangsstoffe Wärme im Wesentlichen ohne Geruchsbeeinträchtigung der Umgebung erzeugt werden kann.

Erfindungsgemäß wird diese Aufgabe gelost durch eine brennstoffbetriebene Heizeinrichtung, insbesondere für Campingfahrzeuge, gemäß Anspruch 1. Diese umfasst eine mit Kohlenwasserstoff und Luft zu speisende erste Kammer zur Erzeugung eines Kohlenwasserstoff/Luft-Gemisches, eine Reformationskatalysatoranordnung, welche das Kohlenwasserstoff/Luft-Gemisch aus der ersten Kammer empfängt und in ein wasserstoffhaltiges Reformat umsetzt, eine zweite Kammer, welche das wasserstoffhaltige Reformat von der Reformationskatalysatoranordnung und Luft empfängt zur Erzeugung eines in dieser zu verbrennenden Reformat/Luft-Gemisches, eine Wärmetauscheranordnung zur Übertragung von in bei der Verbrennung in der zweiten Kammer entstehenden Verbrennungsprodukten transportierter Wärme auf zu erwärmendes Medium.

Bei der erfindungsgemäßen Heizeinrichtung wird also nicht direkt der Kohlenwasserstoff mit Luft in einer Flamme verbrannt, um die dabei entstehende Wärme auf ein zu erwärmendes Medium zu übertragen. Vielmehr wird der Kohlenwasserstoff zunächst zusammen mit der Luft in ein wasserstofhaltiges Reformat umgesetzt. Dieses bzw. der darin enthaltene Wasserstoffanteil wird dann in einer zweiten Stufe zusammen mit Luft verbrannt. Bei dieser Verbrennung entstehen primär Kohlendioxid (CO₂) und Wasser (H₂O). Diese Verbrennungsprodukte, die letztendlich von der Heizeinrichtung abgegeben werden, sind jedoch in der Umgebung eines derartigen Campingfahrzeugs nicht geruchsmäßig wahmehmbar. Auch die in dem Reformat noch enthaltenen niederkettigen Kohlenwasserstoffe, deren Anteil im Bereich von weniger als 100 ppm liegt, werden bei der Verbrennung des Wasserstoffs mit dem Luftsauerstoff vollständig oxidiert, so dass die die Heizeinrichtung verlassenen Abgase bzw. Verbrennungsprodukte im Wesentlichen vollkommen ruß - und mithin auch geruchsfrei sind.

Um die Erzeugung des Kohlenwasserstoff/Luft-Gemisches in der ersten Kammer zu unterstützen, ist der ersten Kammer ein poröses Verdampfermedium zugeordnet zur Aufnahme von flüssigem Kohlenwasserstoff und zur Abgabe von Kohlenwasserstoffdampf in die erste Kammer. Diese erste Kammer arbeitet zusammen mit dem darin vorgesehenen porösen Verdampfermedium also nach Art eines Brennstoffverdampfers, wie er auch für so genannte Verdampferbrenner von Fahrzeugheizgeräten eingesetzt wird.

Dabei kann die Brennstoffverdampfung insbesondere bei vergleichsweise niedrigen Umgebungs- bzw. Systemtemperaturen dadurch noch unterstützt werden, dass dem porösen Verdampfermedium eine Heizeinrichtung zur Erwärmung desselben zugeordnet ist.

In einer Startphase ist es erforderlich, zum Starten der katalytischen Reformationsreaktion in der Reformationskatalysatoranordnung diese über eine bestimmte Starttemperatur im Bereich von einigen 100°C anzuheben. Um dies sehr schnell zu erreichen, ist der ersten Kammer ein erstes Zündorgan zugeordnet ist zum Zünden des Kohlenwasserstoff/Luft-Gemisches in der ersten Kammer. Es wird somit möglich, in der ersten Kammer das darin enthaltene Kohlenwasserstoff/LuftGemisch zu zünden und zu verbrennen. Die dabei entstehenden Verbrennungsabgase durchströmen die Reformationskatalysatoranordnung und erwärmen diese sehr schnell auf vergleichsweise hohe Temperaturen. Zwar treten diese aus einer offenen Flamme resultierenden Verbrennungsabgase über die zweite Kammer und die Wärmetauscheranordnung nach außen als Abgase aus, doch ist die Phase, in welcher eine derartige Verbrennung stattfindet, begrenzt auf diejenige Zeit, die erforderlich ist, um die Reformations-katalysatoranordnung auf Reaktionstemperatur zu bringen.

Zum Starten der Verbrennung in der zweiten Kammer ist der zweiten Kammer ein zweites Zündorgan zugeordnet ist zum Zünden des Reformat/Luft-Gemisches in der zweiten Kammer.

Bei einer baulich sehr einfach zu realisierenden und kompakten Variante kann vorgesehen sein, dass die erste Kammer, die zweite Kammer und die Reformationskatalysatoranordnung in einem gemeinsamen Gehäuse vorgesehen sind. Beispielsweise kann das Gehäuse rohrartig ausgebildet sein.

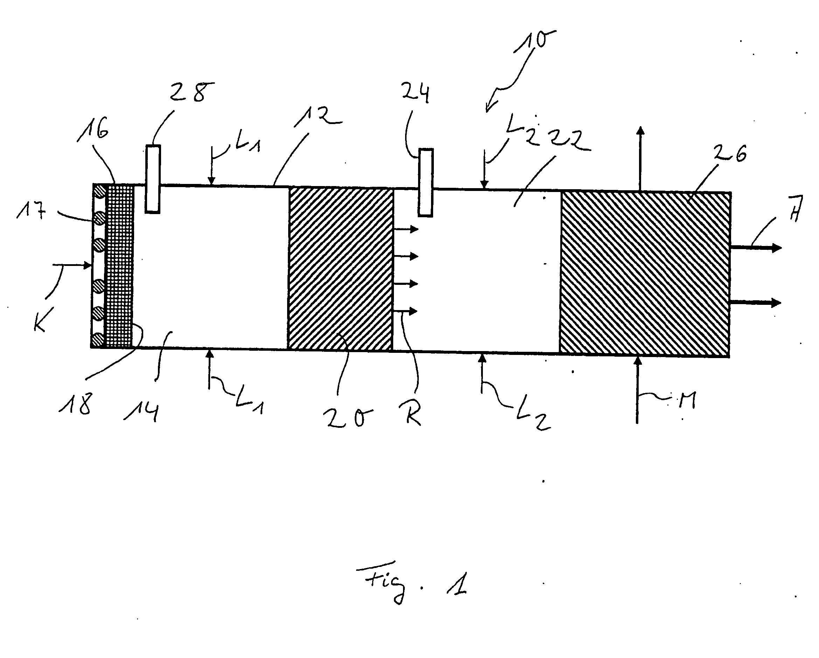

Die vorliegende Erfindung wird nachfolgend anhand der beiliegenden Fig. 1 erläutert, welche eine Prinzip-Längsschnittansicht einer erfindungsgemäßen Heizeinrichtung darstellt.

Die Fig. 1 zeigt eine erfindungsgemäße brennstoffbetriebene Heizeinrichtung 10, die hier in vereinfachter Art und Weise dargestellt ist. Grundsätzlich kann diese Heizeinrichtung 10 so aufgebaut sein, dass die wesentlichen Systembereiche in einem gemeinsamen, beispielsweise rohrartigen Gehäuse 12 vorgesehen sind. Dieses rohrartige Gehäuse 12 kann selbstverständlich in Anpassung an die verschiedenen Systembereiche mit unterschiedlichen Außenabmessungen ausgebildet sein.

In Fig. 1 links, also stromaufwärtig, ist in dem Gehäuse 12 eine erste Kammer 14 gebildet, in welcher ein Gemisch aus Kohlenwasserstoff und Luft erzeugt wird. Zu diesem Zwecke wird ein Kohlenwasserstoffstrom K in ein poröses Verdampfermedium 16, z. B. Metallvlies- oder Geflechtmaterial, eingeleitet. Dieses nimmt den flüssigen Kohlenwasserstoff auf, verteilt ihn in seinem Innenvolumenbereich durch Kapillarförderwirkung und gibt an seiner der ersten Kammer 14 zugewandten Seite 18 den Kohlenwasserstoff in Dampfform ab. Über eine oder mehrere Eintrittsöffnungen wird ein erster Luftstrom L₁ in die erste Kammer 14 geleitet. Dieser Luftstrom L₁ durchmischt sich mit dem Kohlenwasserstoffdampf, so dass ein Kohlenwasserstoff/Luft-Gemisch erzeugt wird.

Um die Verdampfung des zunächst flüssig zugeführten Kohlenwasserstoffs, insbesondere bei vergleichsweise niedrigen Umgebungstemperaturen zu unterstützen, ist im porösen Verdampfermedium 16 eine elektrisch erregbare Heizeinrichtung 17 zugeordnet. Diese Heizeinrichtung 17 erwärmt bei Erregung derselben das poröse Verdampfermedium 16 und den flüssigen Kohlenwasserstoff, der darin enthalten ist.

Es sei hier darauf hingewiesen, dass als flüssiger Kohlenwasserstoff vorzugsweise derjenige Brennstoff eingesetzt wird, der auch in einem Fahrzeug bzw. Campingfahrzeug genutzt wird, in welchem eine derartige Heizeinrichtung 10 installiert ist. Hier kann also insbesondere Benzin oder Diesel eingesetzt werden.

Stromabwärts der ersten Kammer 14 ist eine Reformationskatalysatoranordnung 20 vorgesehen. Diese Reformationskatalysatoranordnung 20 kann beispielsweise so aufgebaut sein, wie dies in Brennstoffzellen vorgeschalteten Reformatoren der Fall ist und kann nach dem Prinzip der katalytisch unterstützten partiellen Oxidation arbeiten. In dieser Reformationskatalysatoranordnung 20 wird also das Kohlenwasserstoff/Luft-Gemisch in einen Reformatstrom R umgesetzt, der im Wesentlichen Wasserstoff (H₂) und Kohlenmonoxid (CO) enthält, sowie ggf. noch niederkettige Kohlenwasserstoffe. Dieser Reformatstrom R gelangt in eine zweite Kammer 22, in welche ebenfalls über eine oder mehrere Öffnungen ein zweiter Luftstrom L₂ eingeleitet wird. Dieser Luftstrom L₂ vermischt sich mit dem Reformatstrom R, so dass ein Reformat/Luft-Gemisch erzeugt wird. Dieses kann durch ein der zweiten Kammer. 22 zugeordnetes Zündorgan 24, beispielsweise einen elektrisch erregbaren Glühzündstift, gezündet werden, so dass insbesondere der in dem Reformatstrom R enthaltene Wasserstoff mit dem in dem Luftstrom L₂ enthaltenen Sauerstoff zur Verbrennung gebracht wird. Bei dieser Verbrennung werden auch die im Reformatstrom R mitgeführten niederkettigen Kohlenwasserstoffe verbrannt bzw. oxidiert.

Die bei der Verbrennung in der zweiten Kammer 22 entstehenden Verbrennungsprodukte bzw. Abgase strömen zu einer Wärmetauscheranordnung 26 und verlassen dann als Abgasstrom A die Heizeinrichtung 10. In der Wärmetauscheranordnung 26 wird eine thermische Wechselwirkung zwischen den die Verbrennungswärme transportierenden Verbrennungsprodukten und einem Strom M des zu erwärmenden Mediums erzeugt. Beispielsweise kann der Strom der Verbrennungsprodukte eine Rohrleitung umströmen, durch welche der Strom M des zu erwärmenden Mediums hindurchgeleitet wird. Dieses kann dann als Warmluft in den Innenraum eines Fahrzeugs eingeleitet werden oder als Warmwasser genutzt werden.

Um insbesondere in einer Startphase dafür zu sorgen, dass die Reformationskatalysatoranordnung 20 vergleichsweise schnell auf die zum Starten der katalytischen Reaktion erforderliche Temperatur gebracht wird, kann in der ersten Kammer 14 das darin gebildete Kohlenwasserstoff/Luft-Gemisch verbrannt werden. Die dabei entstehenden Verbrennungsprodukte transportieren die Verbrennungswärme zur Reformationskatalysatoranordnung 20, so dass diese sehr schnell erwärmt werden kann. Um in der ersten Kammer 14 die Verbrennung zu starten, kann dieser ein zweites Zündorgan 28 zugeordnet sein, das beispielsweise ebenfalls als Glühzündstift ausgebildet ist. Diese Verbrennung in der ersten Kammer 14 kann so lange andauern, bis sichergestellt ist, dass die Reformationskatalysatoranordnung 20 eine geeignete Temperatur aufweist. Dies kann beispielsweise durch Erfassung dieser Temperatur erfolgen oder durch Vorganbe eines Zeitintervalls für diese Verbrennung, welches so bemessen ist, dass auch bei niedrigen Umgebungstemperaturen sichergestellt ist, dass die Reformationskatalysatoranordnung 20 die erforderliche Temperatur erreicht hat. Ist dies dann der Fall, kann die Verbrennung in der ersten Kammer 14 kurzzeitig unterbrochen werden, beispielsweise durch kurzzeitige Unterbrechung der Zufuhr des Kohlenwasserstoffstroms K. Ist die Verbrennung zum Stillstand gekommen, kann die Brennstoffzufuhr wieder aufgenommen werden, um das dann erzeugte Kohlenwasserstoff/Luft-Gemisch in der Reformationskatalysatoranordnung 20 katalytisch zu dem Reformat umzusetzen. Zumindest in dieser Phase, in welcher zum Vorwärmen der Reformationskatalysatoranordnung 20 in der Kammer 14 eine Verbrennung abläuft, kann die vorangehend bereits erläuterte elektrische Heizeinrichtung 17 aktiviert werden. Eine weitergehende Aktivierung derselben nach dem Erlöschen der Verbrennung und beispielsweise der Wiederaufnahme der Kohlenwasserstoffzufuhr kann deshalb vorteilhaft sein, da die bei in der Kammer 22 ablaufender Verbrennung entstehende Wärme zwar möglicherweise durch Wärmeleitung zum Teil auch auf das poröse Verdampfermedium 16 übertragen werden kann, dieser Energieanteil jedoch so gering sein kann, dass durch zusätzliche Erregung der elektrischen Heizeinrichtung 17 und die dadurch stärkere Brennstoffabdampfung auch eine für die Bereitstellung größerer Wärmemengen ausreichende Reformatmenge sicherstellen kann.

Bei der erfindungsgemäßen Heizeinrichtung 10 kann insbesondere dann, wenn Dieselkraftstoff als Kohlenwasserstoff eingesetzt wird, die Gemischbildung in der ersten Kammer 14 dadurch verbessert werden, dass vor der Reformationskatalysatoranordnung 20 der so genannte Kalte-Flamme-Prozess genutzt wird. Auch hierzu ist es vorteilhaft, wenn in der Startphase die erste Kammer 14 als Brennkammer genutzt wird, so dass auch die für den Kalte-Flamme-Prozess erforderliche Temperatur von etwa 300°C sichergestellt werden kann. Durch diesen Prozess werden die langkettigen Kohlenwasserstoffmoleküle, wie sie insbesondere im Dieselkraftstoff enthalten sind, in kurzkettige Kohlenwasserstoffmoleküle zersetzt, die dann im Rahmen der in der Reformationskatalysatoranordnung 20 ablaufenden partiellen Oxidation effizienter in das wasserstoffhaltige Reformat umgesetzt werden können.

Mit der erfindungsgemäßen Heizeinrichtung 10 ist es also möglich, einen grundsätzlich als Brennstoff genutzten Kohlenwasserstoff als Ausgangsmaterial für einen weiteren Brennstoff, nämlich Wasserstoff, zu nutzen und diesen in der Einrichtung selbst erst erzeugten weiteren Brennstoff dann zu verbrennen. Bei der Verbrennung dieses weiteren Brennstoffs, also primär Wasserstoff, mit dem Luftsauerstoff entstehen in erster Linie Verbrennungsprodukte, die geruchsmäßig nicht wahrnehmbar sind, nämlich Wasser und Kohlenmonoxid. Die in der Startphase gleichwohl stattfindende Verbrennung von Kohlenwasserstoff und Luft in einer offenen Flamme ist auf einen vergleichsweise kurzen Zeitraum begrenzt, so dass eine spürbare Geruchsbeeinträchtigung der Umwelt praktisch nicht auftreten wird.

Die erfindungsgemäße Heizeinrichtung 10 kann insbesondere im Umfeld von Campingfahrzeugen weiterhin dazu genutzt werden, auch für andere Energieverbraucher in einem Campingfahrzeug den die Energie bzw. Wärme liefernden Ausgangsstoff bereitzustellen. Beispielsweise kann der Reformatstrom R auch in einer Kochstelle oder in einem Backofen zur Erzeugung von Wärme mit dem Luftsauerstoff verbrannt werden. Dies könnte beispielsweise dadurch erfolgen, dass vor Einleitung in die zweite Kammer 22 ein Teil des Reformatstroms R über eine Zweigleitung, die selbstverständlich durch ein Ventil abschließbar sein kann, abgezweigt und diesem weiteren Verbraucher zugeführt wird. Auch könnte so vorgegangen werden, dass der Reformatstrom dadurch für derartige andere Verbraucher nutzbar gemacht wird, dass die Verbrennung in der zweiten Kammer 22 nicht gestartet wird, der Reformatstrom R also durch die Wärmetauscheranordnung 26 hindurchgeleitet wird und als "Abgasstrom" die Heizeinrichtung 10 verlässt und zu einem weiteren Verbraucher geleitet wird.

## Patentansprüche

1. Brennstoffbetriebene Heizeinrichtung, insbesondere für Campingfahrzeuge, umfassend:
- eine mit Kohlenwasserstoff (K) und Luft (L₁) zu speisende erste Kammer (14) zur Erzeugung eines Kohlenwasserstoff/Luft-Gemisches in der ersten Kammer (14), wobei der ersten Kammer (14) ein poröses Verdampfermedium (16) zugeordnet ist zur Aufnahme von flüssigem Kohlenwasserstoff (K) und zur Abgabe von Kohlenwasserstoffdampf in die erste Kammer (14), und wobei wenigstens eine Eintrittsöffnung in die erste Kammer (14) zum Einleiten der mit dem Kohlenwasserstoffdampf zu durchmischenden Luft (L₁) vorgesehen ist, wobei der ersten Kammer (14) ein erstes Züridorgan (28) zugeordnet ist zum Zünden des Kohlenwasserstoff/Luft-Gemisches in der ersten Kammer (14),
- eine Reformationskatalysatoranordnung (20), welche das Kohlenwasserston/Luft-Gemisch aus der ersten Kammer (14) empfängt und in ein wasserstoffhaltiges Reformat (R) umsetzt,
- eine zweite Kammer (22), welche das wasserstoffhaltige Reformat (R) von der Reformationskatalysatoranordnung (20) und durch wenigstens eine Öffnung Luft (L₂) empfängt zur Erzeugung eines in dieser zu verbrennenden Reformat/Luft-Gemisches, wobei der zweiten Kammer (22) ein zweites Zündörgan (24) zugeordnet ist zum Zünden des Reformat/Luft-Gemisches in der zweiten Kammer 22
- eine Wärmetauscheranordnung (26) zur Übertragung von in bei der Verbrennung in der zweiten Kammer (22) entstehenden Verbrennungsprodukten (A) transportierter Wärme auf zu erwärmendes Medium (M).

2. Heizeinrichtung nach Anspruch 1,
**dadurch gekennzeichnet, dass** dem porösen Verdampfermedium (16) eine Heizeinrichtung (17) zur Erwärmung desselben zugeordnet ist.

3. Heizeinrichtung nach einem der Ansprüche 1 oder 2,
**dadurch gekennzeichnet, dass** die erste Kammer (14), die zweite Kammer (22) und die Reformationskatalysatoranordnung (20) in einem gemeinsamen Gehäuse (12) vorgesehen sind.

4. Heizeinrichtung nach Anspruch 3,
**dadurch gekennzeichnet, dass** dass das Gehäuse (12) rohrartig ausgebildet ist.

## Claims

1. Fuel operated heating device, in particular for camping cars, comprising:
- a first chamber (14) to be fed with hydrocarbon (K) and air (L₁) for producing a hydrocarbon/air mixture in said first chamber (14), a porous evaporator medium (16) being associated to said first chamber (14) for receiving liquid hydrocarbon (K) and for releasing hydrocarbon vapour into said first chamber (14), and at least one entry opening into said first chamber (14) being provided for inserting the air (L₁) to be mixed with said hydrocarbon vapour into said first chamber (14), a first ignition element (28) being associated to said first chamber (14) for igniting said hydrocarbon/air mixture in said first chamber (14),
- a reformation catalyst arrangement (20), receiving said hydrocarbon/air mixture from said first chamber (14) and converting it into a hydrogenous reformat (R),
- a second chamber (22) receiving said hydrogenous reformat (R) from said reformation catalyst arrangement (20) and receiving air (L₂) through at least one opening for producing a reformat/air mixture to be burnt inside the chamber, a second ignition element (24) being associated to said second chamber (22) for igniting said reformat/air mixture in said second chamber (22),
- a heat exchanger arrangement (26) for transferring the heat transported by combustion products (A) produced during combustion in said second chamber (22) to a medium (M) to be heated.

2. Heating device according to claim 1,
**characterized in** a heating device (17) being associated to said porous evaporator medium (16) for heating the latter.

3. Heating device according to one of claims 1 or 2,
**characterized in** the first chamber (14), the second chamber (22) and the reformation catalyst arrangement (20) being provided in a common housing (12).

4. Heating device according to claim 3,
**characterized in** said housing (12) being configured tubular.

## Revendications

1. Dispositif de chauffage utilisant un combustible, en particulier pour des camping-cars, comprenant:
- une première chambre (14) à alimenter avec de l'hydrocarbure (K) et de l'air (L₁) pour produire un mélange hydrocarbure/air dans la première chambre (14), un médium d'évaporateur poreux (16) étant associé à la première chambre (14) pour recevoir de l'hydrocarbure liquide (K) et pour dégager de la vapeur d'hydrocarbure envers la première chambre (14), et au moins une ouverture d'entrée dans la première chambre (14) étant prévue pour insérer l'air (L₁) à mélanger avec la vapeur d'hydrocarbure, un premier élément d'allumage (28) étant associé à la première chambre (14) pour allumer le mélange hydrocarbure/air dans la première chambre (14),
- un arrangement de catalyseur au reformage (20) recevant le mélange hydrocarbure/air de la première chambre (14) et le convertissant dans un reformat (R) contenant de l'hydrogène,
- une deuxième chambre (22) recevant le reformat (R) contenant de l'hydrogène de l'arrangement de catalyseur au reformage (20) et de l'air (L₂) par au moins une ouverture pour produire un mélange reformat/air à brûler dans la chambre, un deuxième élément d'allumage (24) étant associé à la deuxième chambre (22) pour allumer le mélange reformat/air dans la deuxième chambre (22),
- un arrangement d'échangeur de chaleur (26) pour transférer la chaleur transportée par les produits de combustion (A) générés pendant la combustion dans la deuxième chambre (22) à un médium (M) à chauffer.

2. Dispositif de chauffage selon la revendication 1,
**caractérisé par** un dispositif de chauffage (17) étant associé au médium d'évaporation poreux (16) pour chauffer ce dernier.

3. Dispositif de chauffage selon une des revendications 1 ou 2,
**caractérisé par** la première chambre (14), la deuxième chambre (22) et l' arrangement de catalyseur au reformage (20) étant prévus dans un boîtier commun (12).

4. Dispositif de chauffage selon la revendication 3,
**caractérisé par** le boîtier (12) étant configuré tubulaire.
